# EUROPÄISCHE PATENTSCHRIFT

(11) **EP 1 621 330 B1**
(45) Veröffentlichungstag und Bekanntmachung des Hinweises auf die Patenterteilung: **15.04.2009**
(21) Anmeldenummer: 05014645.5
(22) Anmeldetag: 06.07.2005
(51) Int. Cl.: B32B 3/28, B32B 7/12, B65D 81/03, B29C 51/08

(54) **Selbstklebende Luftpolsterfolie als Schutz für frische Lacke bei der Fahrzeugmontage und Verfahren zur Herstellung**
Self-adhesive bubble wrap for protecting frish paints in vehicle assembling and process for producing the same
Film à bulles autocollant pour la protection des peintures fraîches pour l'assemblage d'un véhicule et son procédé de fabrication

(30) Priorität: 27.07.2004 DE 102004036417
(43) Veröffentlichungstag der Anmeldung: 01.02.2006
(73) Patentinhaber: tesa AG, 20253 Hamburg (DE); Sealed Air Verpackungen GmbH, 36304 Alsfed (DE)
(72) Erfinder: Römling, Horst, 21279 Hollenstedt (DE); Barkley, Arne, 25551 Winseldorf (DE); Graf, Klaus-Peter, 64572 Büttelborn (DE); Fuchs, Ralf, 36304 Alsfeld (DE); Wagner, Stefan, 35279 Neustadt/Hessen (DE)
(74) Vertreter: Stubbe, Andreas

(56) Entgegenhaltungen:
- EP-A- 0 519 278
- US-A- 4 412 879
- US-A- 5 895 714
- US-A- 6 093 466

## Beschreibung

Die Erfindung betrifft eine selbstklebende Luftpolsterfolie als Schutz für frische Lacke bei der Fahrzeugmontage, Verfahren zur Herstellung und Verwendungsmöglichkeiten derselben.

Selbstklebende Luftpolsterfolien als Verpackungsmittel für empfindliche Güter sind an sich bekannt. Eine besonders bevorzugte Qualität, die sich durch Langlebigkeit der Luftpolster und außerdem durch eine rückseitige Abdeckungsfolie für die Luftpolster auszeichnet, so dass die Trägerfolie nicht zwischen den Polstern ohne Polsterwirkung bleibt, ist unter dem Markennamen AirCap® der Firma Sealed Air bekannt.
Diese Luftpolsterfolie zeichnet sich dadurch aus, dass ein dreischichtiger Aufbau der Folie aus Polyethylen/Sperrschicht/Polyethylen ein Austritt von Luft aus den einzelnen Noppen der Folie verhindert.

Selbstklebend ausgerüstete Luftpolsterfolien auf frisch lackierten Karossen in der Fahrzeug-, insbesondere der Pkw-Herstellung anzuwenden, birgt das Risiko, dass die Lacke, die unmittelbar nach ihrer Trocknung noch nicht ihren Endzustand erreicht haben und die dadurch weich sind und möglicherweise auch noch Kondensate von der Vernetzung gasförmig absondern, sich unter der Klebmasse der selbstklebenden Luftpolsterfolie irreversibel verformen und/oder verfärben.

Selbstklebende Folien, die auf frisch lackierte Karosserien zu kleben sind und die im Extremfall durch die gesamte Montage des Fahrzeugs und den gesamten Transportweg bis zum Händler, der das Fahrzeug gegebenenfalls nach einiger Zeit der Lagerung für die Ausstellung beziehungsweise die Übergabe an den Käufer vorbereitet, auf dem Lack verbleiben dürfen, ohne irreversible Lackverformungen oder -verfärbungen hervorzurufen, sind an sich bekannt. Eine bevorzugte Ausführungsform wird von der tesa AG hergestellt und unter dem Markennamen tesa® Bodyguard vertrieben.

Beispielsweise sei eine Lackschutzfolie auf Basis Polyethylenvinylacetat (EVA) erwähnt, die in DE 195 32 220 A1 beschrieben ist. Dieses System erreicht bereits nach kurzer Zeit gute Verklebungswerte und gewährleistet eine große Verklebungssicherheit gegen unerwünschtes selbsttätiges Ablösen während des Transportes. Als nachteilig wird vom Anwender mitunter das starke Aufziehen empfunden, das mit einer Mischung verschiedener Copolymere des EVA wie in DE 100 50 499 A1 beschrieben gemildert werden kann.

Derartige selbstklebende Schutzfolien haben aber für die Praxis der Fahrzeugmontage häufig zu wenig Schutzwirkung gegen mechanische Einwirkungen und sie werden häufig unter selbstklebende Luftpolsterfolien, Hartschalen, Polsterdecken geklebt, um deren Einwirkung auf den frischen Lack zu vermeiden. Das bedeutet zusätzliche Arbeitsschritte und damit Kosten in der Fahrzeugherstellung sowohl bei der Applikation als auch bei der Entfernung der Montageschutzmaßnahmen.

Aus der US 6,093,466 A ist eine selbstklebende Luftpolsterfolie bekannt. Die Luftpolsterfolie besteht aus einer Noppen ausbildenden Schicht, die auf einer darunter liegenden Folie nur aufliegt. Diese Folie ist auf der freien, der der Noppen ausbildenden Schicht gegenüber liegenden Seite mit einer Klebemasse ausgerüstet Die die Noppen ausbildende Schicht wird auf zum Beispiel dem Automobil in ihrer Lage festgelegt, indem eine mit einer Klebemasse ausgerüstete Deckelfolie mit der Folie verklebt wird, so dass die Noppen ausbildende Schicht zwischen Deckelfolie und Folie liegt, wobei letztere auf dem Automobil klebt.

Aufgabe der Erfindung ist es, eine Luftpolsterfolie und Lackschutzfolie zu einem Produkt zu kombinieren und zwar in einer kostengünstigen Weise, indem eine Modifikation der Lackschutzfolie integral bei der Herstellung der Luftpolsterfolie als rückseitige Abdeckungsfolie eingesetzt wird.

Gelöst wird diese Aufgabe durch eine selbstklebende Luftpolsterfolie, wie sie gemäß Hauptanspruch beschrieben ist. Gegenstand der Unteransprüche sind besonders vorteilhafte Ausführungsformen des Erfindungsgegenstands sowie besonders vorteilhafte Verwendungen und Herstellungsverfahren der erfindungsgemäßen Luftpolsterfolie.

Demgemäß betrifft die Erfindung eine selbstklebende Luftpolsterfolie zum temporären Schutz von frischen Lackoberflächen von Fahrzeugen wie Automobilen und frisch lackierten Fahrzeugteilen mit einem ersten Trägerfilm, auf dem ein Noppen bildender zweiter Trägerfilm vorhanden ist, wobei die Noppen insbesondere mit Luft gefüllt sind, auf die Noppen zumindest partiell eine Folie aus Polyethylen unlösbar aufgebracht und auf der Folie eine Selbstklebeschicht aufgebracht ist.

In einer ersten vorteilhaften Ausführungsform der Erfindung ist zwischen der Folie und der Kleberschicht einer Haftvermittlerschicht vorhanden.

Des Weiteren können vorzugsweise der erste Trägerfilm, der zweite Trägerfilm und/oder die Folie mindestens ein Lichtschutzmittel in einer Menge von mindestens 0,15 Gew.-% und/oder Titandioxid, vorzugsweise in einer Menge von 5 bis 15 Gew.-%, enthalten.

In einer vorteilhaften Ausführungsform weist der zweite Trägerfilm einen dreischichtigen Aufbau aus Polyethylenfolie/Sperrschicht/Polyethylenfolie auf.

Der erste Trägerfilm kann aus Polyolefinen bestehen wie Polyethylen, Polypropylen sowie deren Mischungen oder Copolymeren. Der erste Trägerfilm kann auch als Schaumschicht ausgebildet sein. Des Weiteren liegt innerhalb des Erfindungsgedankens, den ersten Trägerfilm als mit Polyethylen beschichteten Papierträger auszuführen.

Für die Selbstklebemasse können unterschiedliche Kleber eingesetzt werden, ohne dass die Einsatzmöglichkeit der Folie beschränkt ist.

Sie wird vorzugsweise in Flächengewichten zwischen 3 und 35 g/m², bevorzugt zwischen 8 und 20 g/m² auf die Folie aufgetragen. Die Auftragung kann aus Lösung, zum Beispiel Hexan oder Benzin, erfolgen, aber auch aus der Schmelze.

In einer weiteren bevorzugten Ausführungsform besteht die Selbstklebemasse aus Butylkautschuk, wobei der Isoprenanteil im Butylkautschuk bevorzugt bis zu 1,2 Molprozent, besonders bevorzugt bis zu 1,8 Molprozent beträgt.

Butylkautschuke sind Copolymere aus Isobuten und Isopren, die durch kationische Polymerisation in Lösung hergestellt werden. Der Isoprenanteil variiert typischerweise zwischen 0,5 und 5 Molprozent. Das Isopren wird normalerweise in 1,4-Addition eingebaut, so dass dieses Copolymer im Gegensatz zum Polyisobutylenhomopolymer Doppelbindungen in der Hauptkette aufweist. Es stellt also ein Bindeglied zwischen einem reinen Poly-cis-Isopren respektive Naturkautschuk und einem Polyisobutylenhomopolymer dar. Eine weitere Gruppe von Butylkautschuken ist die der *starbranched* Typen, bei denen eine intensivere Verzweigung durch Comonomere wie Divinylbenzol erreicht wird. Neuerdings sind auch Butylkautschuke mit seitenständigen Doppelbindungen bekannt (1,2- beziehungsweise 3,4-Addition des Isoprens) und erfindungsgemäß geeignet. Hersteller solcher Produkte sind insbesondere die Firmen Bayer (Bayer Butyl) und Exxon (Exxon Butyl).

Um eine ausreichende Kohäsion für eine Klebmasseanwendung insbesondere bei erhöhten Temperaturen zu erzielen, ist die Molmasse vorteilhafterweise mindestens eines Teils der eingesetzten Polyisobutylene relativ groß, in der Regel mindestens 200.000 g/mol (Zahlenmittel Mₙ).

Zwar sind die Butylkautschuke, ähnlich wie Polyisobutylene mittleren Molekulargewichts, inhärent klebrig. Zur Optimierung der Eigenschaften, insbesondere des Klebeverhaltens, kann die Klebmasse der erfindungsgemäßen Schutzfolie dennoch vorteilhaft mit einem oder mehreren Additiven abgemischt werden. Solche Additive können Klebrigmacher (Haftklebeeigenschaften optimierende Klebharze), Weichmacher, anorganische oder organische Füllstoffe, Pigmente, Lichtschutzmittel unter anderem in Form von UV-absorbierenden sterisch gehinderten Aminen (HALS), Alterungsschutzmittel in Form von zum Beispiel Lactonen, primären und sekundären Antioxidantien oder weitere Elastomere sein. Optional können der Selbstklebemasse Vernetzungsmittel und Vernetzungspromotoren zugesetzt werden. Eine ausführliche Auswahl von Vernetzungsmittel und Vernetzungspromotoren sind in Ullmann's Encyclopedia of Industrial Chemistry (6. Auflage, 2003), Kapitel "Rubber, 4. Chemicals and additives" und "Manual for Rubber Industry", Bayer AG (1995) beschrieben.

Mögliche Elastomere zur Modifizierung der Selbstklebemasse sind zum Beispiel Polyisobutylene, Polyolefincopolymere wie EPM oder EPDM, Polybutene, hydrierte Blockcopolymere aus Styrol und Dienen oder Acrylatcopolymere. Diese Elastomere werden im Bereich von 0 bis 20 Gewichtsanteile, vorzugsweise unter 10 Gewichtsanteilen bezogen auf 100 Gewichtsanteile Butylkautschuk eingesetzt.

Geeignete Klebrigmacher sind beispielsweise synthetische Kohlenwasserstoffharze (zum Beispiel aus C₅- oder C₉-Monomeren), Naturharze, Polyterpenharze auf Basis von α-, β-Pinen oder δ-Limonen, Kolophonium und Kolophoniumderivate sowie weitere, wie sie aufgeführt sind in Ullmann's Encyclopedia of Industrial Chemistry (6. Auflage, 2003), Kapitel "Resins-Synthetic" und "Resins-Natural". Vorrangig werden alterungsstabilere, hydrierte oder teilhydrierte Harze verwendet. In der Klebmasse der erfindungsgemäßen Schutzfolie werden bevorzugt 0 bis 50 Gewichtsteile, insbesondere 0 bis 20 Gewichtsteile eines Klebrigmachers bezogen auf 100 Gewichtsteile Basispolymer verwendet.

Geeignete Weichmacher für die Selbstklebemasse sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate (aus Isobuten oder Ethylen/Propylen), Acrylsäureester, Polyvinylether, Flüssig- und Weichharze auf Basis der Rohstoffe von Klebharzen, Wollwachs und andere Wachse oder flüssige Silikone. Besonders geeignet sind alterungsstabile Weichmacher ohne olefinische Doppelbindung. Bevorzugt werden 0 bis 40 Gewichtsteile, insbesondere 0 bis 10 Gewichtsteile eines Weichmachers bezogen auf 100 Gewichtsteile Basispolymer verwendet.

In einer weiteren vorteilhaften Ausführungsform besteht die Kleberschicht aus einer Mischung von Synthesekautschuken, wobei
a) die Kleberschicht aus einer polaren Komponente A und einer unpolaren Komponente B besteht,
b) wobei die polare Komponente A zu einem Gewichtsanteil von 50 bis 99 % vorliegt und aus einem oder einer Mischung von Copolymeren aus Ethylen und Vinylacetat besteht, dessen Vinylacetatgehalt zwischen 40 Gew.-% und 80 Gew.-% beträgt, und
c) die unpolare Komponente B zu einem Gewichtsanteil von 1 bis 50 % vorliegt und aus einem oder einer Mischung von schwachkristallinen oder amorphen in der Hauptkette gesättigten Homo- oder Copolymeren aus α-Olefinen mit 2 bis 12 Kohlenstoffatomen besteht.

Alternativ kann die unpolare Komponente B zu einem Gewichtsanteil von 1 bis 50 % vorliegen und aus Copolymeren aus α-Olefinen 2 bis 12 Kohlenstoffatomen und nichtkonjugierten Dienen bestehen.

Für die polare Komponente der Klebmasse eignen sich Ethylenvinylacetat-Typen (EVAc), deren VAc-Anteil zwischen 40 und 80 Gew.-% liegt, vorzugsweise zwischen 50 und 70 Gew.-%. Es können auch unterschiedliche EVAc-Typen gemischt werden. Für die unpolare Komponente eignen sich Poly-α-olefine wie Polyisobutylen (PIB), Poly-1-buten (PB), Ethylenpropylencopolymere (EPM), Ethylenpropylendienterpolymere (EPDM), wobei das Dien nichtkonjuguiert ist, Poly-1-hexen, Poly-1-octen und andere schwachkristalline oder amorphe Copolymere von Ethylen und α-Olefinen mit 4-12 Kohlenstoffatomen. Auch die unpolaren Polymere können zur Erzielung optimaler Eigenschaften gemischt werden.

In einer weiteren vorteilhaften Ausführungsform besteht die Selbstklebemasse aus Polyethylenvinylacetat bei einem Vinylacetatgehalt von 40 Gew.-% bis 80 Gew.-%, insbesondere 70 Gew.-%, und mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz, die angestrebten Eigenschaften.
Die Selbstklebemasse kann auf die Folie aus der Lösung oder aus der Schmelze aufgetragen werden.

Die Selbstklebeschichten, wie sie vorstehend näher erläutert sind, können vorteilhaft mit einem oder mehreren Additiven abgemischt sein wie Klebrigmachern, Weichmachern, anorganischen oder organischen Füllstoffen, Pigmenten, Lichtschutzmitteln, vorzugsweise in Form von UV-absorbierenden sterisch gehinderten Aminen (HALS), Alterungsschutzmitteln, vorzugsweise in Form von Lactonen, primären und sekundären Antioxidantien, Vernetzungsmitteln und/oder Vernetzungspromotoren.

Besonders vorteilhaft lässt sich die erfindungsgemäße selbstklebende Luftpolsterfolie herstellen durch folgendes Verfahren:
Aus einem Extruder kommend wird durch eine Düse der zweite Trägerfilm auf eine Übertragungswalze gegossen.
Die Übertragungswalze legt den zweiten Trägerfilm auf eine Tiefziehwalze auf, in der noppenförmige Vertiefungen und in der ein Vakuumbereich vorhanden sind.
Beim Durchlaufen des Vakuumbereichs der Tiefziehwalze wird der zweite Trägerfilm in die Vertiefungen der Tiefziehwalze hineingezogen und bildet so die mit Luft gefüllten Noppen.
Unmittelbar nach Verlassen des Vakuumteils der Tiefziehwalze wird ebenfalls aus einem Extruder kommend durch eine Düse auf eine weitere Übertragungswalze der erste Trägerfilm aufgebracht und von der Übertragungswalze auf den tiefgezogenen zweiten Trägerfilm übertragen.
Schließlich wird die mit einer Selbstklebeschicht ausgerüstete Folie aus Polyethylen in einer aus zwei Walzen bestehenden Kaschierstation auf die Noppen des zweiten Trägerfilms aufgebracht, und zwar unter Anwendung von Druck, der die Luft gefüllten Noppen an der Kuppe abflacht, sie aber nicht zusammendrückt, und unter Anwendung von Hitze, indem heiße Luft mit ungefähr 180 °C über eine Heißluftdüse in den Spalt, den die Folie und der zweite Trägerfilm bei ihrer Zusammenführung bilden, geleitet wird, so dass die Folie mit den Kuppen der Noppen unlösbar verschweißt.

Gemäß weiteren Varianten des Herstellungsverfahrens kann die so erzeugte selbstklebende Luftpolsterfolie zur besseren Verarbeitung durch eine Perforationsstation geleitet werden, in der beispielsweise in einem Abstand von 250 mm Perforationen in der Luftpolsterfolie eingebracht werden, so dass diese von Hand abreißbar ist.
Weiter optional kann die selbstklebende Luftpolsterfolie an den Produktionskanten besäumt, in schmalere Bahnen aufgeteilt und zur Rolle gewickelt werden.

Insbesondere in dieser Form ist die erfindungsgemäße Luftpolsterfolie in der Montage von Fahrzeugherstellern ohne weitere Werkzeuge oder Vorrichtungen unmittelbar einzusetzen.

Besonders vorteilhaft lässt sich die erfindungsgemäße Luftpolsterfolie auf frisch lackierten Oberflächen von Automobilen oder Automobilteilen als Montage- und/oder Transportschutz verwenden so wie überhaupt zum Schutz von empfindlichen Lack-, Metall-, Holz-, Kunststoff- oder Glasoberflächen.

Anhand der nachfolgend beschriebenen Figuren wird die erfindungsgemäße Luftpolsterfolie in einer besonders vorteilhaften Ausführung sowie ein Verfahren zur Herstellung derselben näher erläutert, ohne damit die Erfindung unnötig einschränken zu wollen. Es zeigen
- Figur 1: die erfindungsgemäße Luftpolsterfolie und
- Figur 2: ein Verfahren zur Herstellung der erfindungsgemäßen Luftpolsterfolie nach Figur 1.

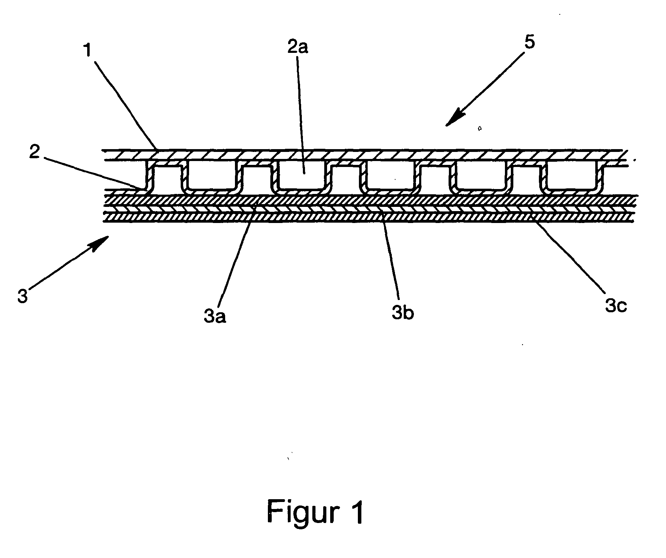

Nach Figur 1 besteht die selbstklebende Luftpolsterfolie 5 aus einem ersten Trägerfilm 1, hier eine Polyethylenfolie, auf der ein Noppen 2a bildender zweiter Trägerfilm 2 vorhanden ist, wobei die Noppen 2a mit Luft gefüllt sind.
Mit den Kuppen der Noppen 2a ist eine mehrschichtige Folie 3 verbunden, wobei eine Folie aus Polyethylen 3a unlösbar auf den Kuppen der Noppen 2a aufgebracht ist. Die Polyethylenfolie 3a ist mit einer selbstklebenden Beschichtung 3c ausgerüstet, wobei zwischen Folie 3a und Kleber 3c eine Haftvermittlerschicht 3b vorhanden ist.

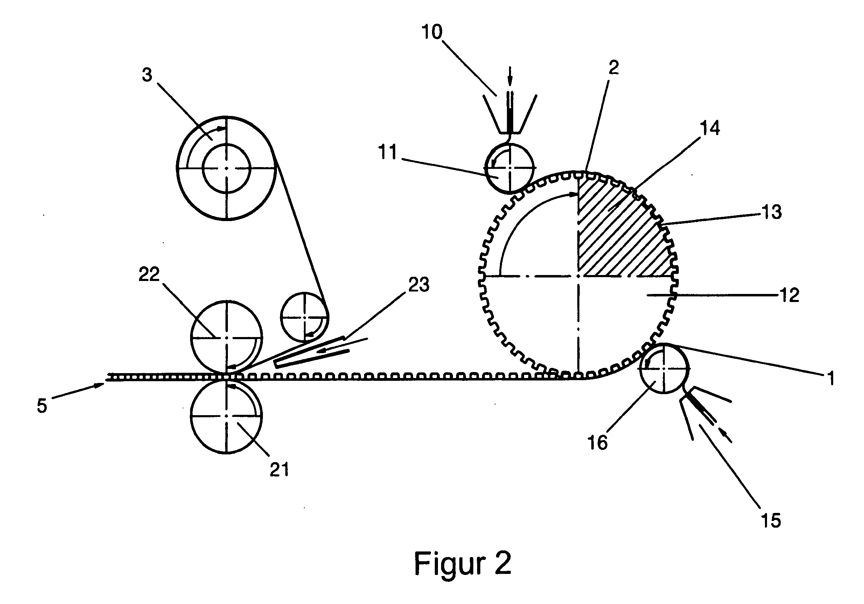

Figur 2 zeigt das Herstellungsverfahren der erfindungsgemäßen Luftpolsterfolie nach Figur 1.
Aus einem Extruder kommend wird durch eine Düse 10 der zweite Trägerfilm 2 auf eine Übertragungswalze 11 gegossen.
Die Übertragungswalze 11 legt den zweiten Trägerfilm 2 auf eine Tiefziehwalze12 auf, in der noppenförmige Vertiefungen 13 und in der ein Vakuumbereich 14, der sich über ein Viertel der Tiefziehwalze 12 erstreckt (90°), vorhanden sind.
Beim Durchlaufen des Vakuumbereichs 14 der Tiefziehwalze 12 wird der zweite Trägerfilm 2 in die Vertiefungen 13 der Tiefziehwalze 12 hineingezogen und bildet so die mit Luft gefüllten Noppen 2a.
Unmittelbar nach Verlassen des Vakuumteils 14 der Tiefziehwalze 12 wird ebenfalls aus einem Extruder kommend durch eine Düse 15 der erste Trägerfilm 1 auf eine weitere Übertragungswalze 16 und von dieser auf den tiefgezogenen zweiten Trägerfilm 2 aufgebracht.
Schließlich wird die mit einer Selbstklebeschicht ausgerüstete Folie 3 aus Polyethylen in einer aus zwei Walzen 21, 22 bestehenden Kaschierstation auf die Noppen 2a des zweiten Trägerfilms 2 aufgebracht, und zwar unter Anwendung von Druck, der die Luft gefüllten Noppen 2a an der Kuppe abflacht, sie aber nicht zusammendrückt, und unter Anwendung von Hitze, indem heiße Luft mit ungefähr 180 °C über eine Heißluftdüse 23 in den Spalt, den die Folie 3 und der zweite Trägerfilm 2 bei ihrer Zusammenführung bilden, geleitet wird, so dass die Folie 3 mit den Kuppen der Noppen 2a unlösbar verschweißt.

## Patentansprüche

1. Selbstklebende Luftpolsterfolie (5) zum temporären Schutz von frischen Lackoberflächen von Fahrzeugen wie Automobilen und frisch lackierten Fahrzeugteilen mit einem ersten Trägerfilm (1), auf dem ein Noppen bildender zweiter Trägerfilm (2) vorhanden ist, wobei die Noppen (2a) insbesondere mit Luft gefüllt sind,
**dadurch gekennzeichnet, dass**,
auf die Noppen (2a) zumindest partiell eine Folie (3a) aus Polyethylen unlösbar aufgebracht und auf der Folie (3a) eine Selbstklebeschicht (3c) aufgebracht ist.

2. Selbstklebende Luftpolsterfolie (5) nach Anspruch 1, **dadurch gekennzeichnet, dass** zwischen der Folie (3a) und der Kleberschicht (3c) eine Haftvermittlerschicht (3b) vorhanden ist.

3. Selbstklebende Luftpolsterfolie (5) nach Anspruch 1 oder 2, **dadurch gekennzeichnet, dass**
der erste Trägerfilm (1), der zweite Trägerfilm (2) und/oder die Folie (3a) mindestens ein Lichtschutzmittel in einer Menge von mindestens 0,15 Gew.-% und/oder Titandioxid, vorzugsweise in einer Menge von 5 bis 15 Gew.-%, enthalten:

4. Selbstklebende Luftpolsterfolie (5) nach zumindest einem der Ansprüche 1 bis 3, **dadurch gekennzeichnet, dass**
der zweite Trägerfilm (2) einen dreischichtigen Aufbau aus Polyethylenfolie/SperrschichtlPolyethylenfolie aufweist.

5. Selbstklebende Luftpolsterfolie (5) nach mindestens einem der vorhergehenden Ansprüche, **dadurch gekennzeichnet, dass**
der erste Trägerfilm (1) aus Polyolefinen besteht wie Polyethylen, Polypropylen sowie deren Mischungen oder Copolymeren.

6. Selbstklebende Luftpolsterfolie (5) nach mindestens einem der vorhergehenden Ansprüche, **dadurch gekennzeichnet, dass**
die Selbstklebemasse (3c) aus Butylkautschuk besteht, wobei der Isoprengehalt im Butylkautschuk bis zu 1,8 Molprozent, bevorzugt bis zu 1,2 Molprozent beträgt.

7. Selbstklebende Luftpolsterfolie (5) nach mindestens einem der vorhergehenden Ansprüche, **dadurch gekennzeichnet, dass**
die Selbstklebeschicht (3c) mit Elastomeren abgemischt ist wie Polyisobutylenen, Polyolefincopolymeren wie EPM oder EPDM, Polybutenen, hydrierten Blockcopolymeren aus Styrol und Dienen oder Acrylatcopolymeren, wobei die Elastomere vorzugsweise im Bereich von 0 bis 20 Gewichtsanteilen, besonders vorzugsweise unter 10 Gewichtsanteilen bezogen auf 100 Gewichtsanteile Butylkautschuk eingesetzt werden

8. Selbstklebende Luftpolsterfolle (5) nach mindestens einem der vorhergehenden Ansprüche, **dadurch gekennzeichnet, dass**
die Selbstklebemasse (3c) aus einer polaren Komponente A und einer unpolaren Komponente B besteht, wobei die polare Komponente A zu einem Gewichtsanteil von 50 bis 99 % vorliegt und aus einem oder einer Mischung von Copolymeren aus Ethylen und Vinylacetat besteht, dessen Vinylacetatgehalt zwischen 40 Gew.-% und 80 Gew.-% beträgt, und die unpolare Komponente B zu einem Gewichtsanteil von 1 bis 50 % vorliegt und aus einem oder einer Mischung von schwachkristalünen oder amorphen in der Hauptkette gesättigten Homo- oder Copolymeren aus α-Olefinen mit 2 bis 12 Kohlenstoffatomen besteht.

9. Selbstklebende Luftpolsterfolie (5) nach mindestens einem der vorhergehenden Ansprüche, **dadurch gekennzeichnet, dass**
die Selbstklebenasse (3c) aus einer polaren Komponente A und einer unpolaren Komponente B besteht, wobei die polare Komponente A zu einem Gewichtsanteil von 50 bis 99 % vorliegt und aus einem oder einer Mischung von Copolymeren aus Ethylen und Vinylacetat besteht, dessen Vinylacetatgehalt zwischen 40 Gew.-% und 80 Ges.-% beträgt, und die unpolare Komponente B zu einem Gewichtsanteil von 1 bis 50 % vorliegt und aus Copolymeren aus α-Olefinen 2 bis 12 Kohlenstoffatomen und nichtkonjugierten Dienen besteht.

10. Selbstklebende Luftpolsterfolie (5) nach mindestens einem der vorhergehenden Ansprüche, **dadurch gekennzeichnet, dass**
die Selbstklebemasse (3c) aus Polyethylenvinylacetat bei einem Vinylacetatgehalt von 40 Ges.-% bis 80 Gew.%, insbesondere 70 Gew.-%, und mit einem Verlustwinkel tan δ von 0,6 bis 1,0, gemessen bei einer Temperatur von 60°C und einer Frequenz von 10⁻² Hz, und von 0,4 bis 0,7, gemessen bei einer Temperatur von 60 °C und einer Frequenz von 10 Hz, besteht.

11. Selbstklebende Luftpolsterfolle (5) nach mindestens einem der vorhergehenden Ansprüche, **dadurch gekennzeichnet, dass**
die Selbstklebeschicht (3c) mit einem oder mehreren Additiven abgemischt ist wie Klebrigmachern, Weichmachern, anorganischen oder organischen Füllstoffen, Pigmenten, Lichtschutzmitteln, vorzugsweise in Form von UV-absorbierenden sterisch gehinderten Aminen (HALS), Alterungsschutzmitteln, vorzugsweise in Form von Lactonen, primären und sekundären Antioxidantien, Vernetzungsmitteln und/oder Vemetzungspromotoren.

12. Verfahren zur Herstellung einer selbstklebenden Luflpolsterfolie (5) nach mindestens einem der vorhergehenden Ansprüche, **dadurch gekennzeichnet, dass**
aus einem Extruder kommend durch eine Düse der zweite Trägerfilm (2) auf eine Übertragungswalze gegossen werden,
die Übertragungswalze den zweiten Trägerfilm (2) auf eine Tiefziehwalze auflegt, in der Tiefziehwalze noppenförmige Vertiefungen und ein Vakuumbereich vorhanden sind,
beim Durchlaufen des Vakuumbereichs der Tiefziehwalze der zweite Trägerfilm (2) in die Vertiefungen der Tiefziehwalze hineingezogen wird und so die Noppen (2a) bildet,
unmittelbar nach Verlassen des Vakuumteils der Tiefziehwalze ebenfalls aus einem eines Extruder kommend durch eine Düse der erste Trägerfilm (1) auf eine weitere Übertragungswalze und von dieser auf den tiefgezogenen zweiten Trägerfilm (2) aufgebracht wird,
die mit einer Selbstklebeschicht (3c) ausgerüstete Folie (3a) aus Polyethylen in einer aus Walzen bestehenden Kaschierstation auf die Noppen (2a) des zweiten Trägerfilms (2) aufgebracht wird, und zwar unter Anwendung von Druck, der die Luft gefüllten Noppen (2a) an der Kuppe abflacht, sie aber nicht zusammendrückt, und unter Anwendung von Hitze, indem heiße Luft mit ungefähr 180 °C über eine Heißluftdüse in den Spalt, den die Folie (3a) und der zweite Trägerfilm (2) bei ihrer Zusammenführung bilden, geleitet wird, so dass die Folie (3a) mit den Kuppen der Noppen (2a) unlösbar verschweißt.

13. Verwendung einer Luftpolsterfolie (5) nach zumindest einem der vorhergehenden Ansprüche auf frisch lackierten Oberflächen von Automobilen oder Automobilteilen als Montage- und/oder Transportschutz.

14. Verwendung einer Luftpolsterfolie (5) nach zumindest einem der vorhergehenden Ansprüche zum Schutz von empfindlichen Lack-, Metall-, Holz-, Kunststoff- oder Glasoberflächen.

## Claims

1. Self-adhesive air cushion film (5) for temporary protection of fresh paint surfaces of vehicles such as automobiles and freshly painted vehicle parts, having a first carrier film (1) on which a second, bubble-forming carrier film (2) is present, the bubbles (2a) being filled in particular with air, **characterized in that** a sheet (3a) of polyethylene is inseparably applied at least partially to the bubbles (2a), and a self-adhesive layer (3c) is applied to the film (3a).

2. Self-adhesive air cushion film (5) according to Claim 1, **characterized in that** there is an adhesion promoter layer (3b) between the sheet (3a) and the layer of adhesive (3c).

3. Self-adhesive air cushion film (5) according to Claim 1 or 2, **characterized in that** the first carrier film (1), the second carrier film (2) and/or the sheet (3a) contain at least one light stabilizer in an amount of at least 0.15% by weight and/or titanium dioxide, preferably in an amount of 5 to 15% by weight.

4. Self-adhesive air cushion film (5) according to at least one of Claims 1 to 3, **characterized in that** the second carrier film (2) features a three-layer construction comprising polyethylene sheet/barrier layer/polyethylene sheet.

5. Self-adhesive air cushion film (5) according to at least one of the preceding claims, **characterized in that** the first carrier film (1) is composed of polyolefin such as polyethylene, polypropylene and their blends or copolymers.

6. Self-adhesive air cushion film (5) according to at least one of the preceding claims, **characterized in that** the self-adhesive compound (3c) is composed of butyl rubber, the isoprene content of the butyl rubber being up to 1.8 mol percent, preferably up to 1.2 mol percent.

7. Self-adhesive air cushion film (5) according to at least one of the preceding claims, **characterized in that** the self-adhesive layer (3c) has been blended with elastomers such as polyisobutylenes, polyolefin copolymers such as EPM or EPDM, polybutenes, hydrogenated block copolymers of styrene and dines or acrylate copolymers, the elastomers preferably being used in proportions in the range from 0 to 20 parts by weight, more preferably below 10 parts by weight, per 100 parts by weight of butyl rubber.

8. Self-adhesive air cushion film (5) according to at least one of the preceding claims, **characterized in that** the self-adhesive compound (3c) is composed of a polar component A and an apolar component 13, the polar component A being present in a fraction of 50% to 99% by weight and consisting of a copolymer or mixture of copolymers of ethylene and vinyl acetate whose vinyl acetate content is between 40% and 80% by weight, and the apolar component B being present in a fraction of 1% to 50% by weight and consisting of one or a mixture of homopolymers or copolymers of α-olefins having 2 to 12 carbon atoms, these polymers being saturated in the main chain and being amorphous or having a low degree of crystallinity.

9. Self-adhesive air cushion film (5) according to at least one of the preceding claims, **characterized in that** the self-adhesive compound (3c) is composed of a polar component A and an apolar component B, the polar component A being present in a fraction of 50% to 99% by weight and consisting of a copolymer or mixture of copolymers of ethylene and vinyl acetate whose vinyl acetate content is between 40% and 80% by weight, and the apolar component B being present in a fraction of 1% to 50% by weight and consisting of copolymers of α-olefins of 2 to 12 carbon atoms and nonconjugated dienes.

10. Self-adhesive air cushion film (5) according to at least one of the preceding claims, **characterized in that** the self-adhesive compound (3c) is composed of polyethylene-vinyl acetate at a vinyl acetate content of 40% to 80% by weight, in particular 70% by weight, and with a loss angle tan δ of 0.6 to 1.0, measured at a temperature of 60°C and a frequency of 10² Hz, and of 0.4 to 0.7, measured at a temperature of 60°C and a frequency of 10 Hz.

11. Self-adhesive air cushion film (5) according to at least one of the preceding claims, **characterized in that** the self-adhesive layer (3c) has been blender with one or more additives such as tackifiers, plasticizers, organic or inorganic fillers, pigments, light stabilizers, preferably in the form of UV-absorbing sterically hindered amines (HALS), aging inhibitors, preferably in the form of lactones, primary and secondary antioxidants, crosslinking agents and/or crosslinking promoters.

12. Process for producing a self-adhesive air cushion film (5) according to at least one of the preceding claims, **characterized in that**
arriving from an extruder, the second carrier film (2) is cast through a die onto a transfer roll,
the transfer roll lays the second carrier film (2) onto a thermoforming roll, containing bubble-shaped depressions and a vacuum zone,
as it traverses the vacuum zone of the thermoforming roll, the second carrier film (2) is drawn into the depressions in the thermoforming roll and thus forms the bubbles (2a),
immediately following departure from the vacuum section of the thermoforming roll, and likewise arriving from an extruder, the first carrier film (1) is applied through a die onto a further transfer troll and is transferred from the transfer roll to the thermoformed second carrier film (2),
the sheet (3a) of polyethylene, provided with a self-adhesive layer (3c), is applied in a laminating station, consisting of rolls, to the bubbles (2a) in the second carrier film (2), a procedure which takes place with application of pressure, which flattens the air-filled bubbles (2a) at the tip but does not compress them, and with application of heart, with hot air at approximately 180°C being passed through a hot-air nozzle into the nip formed by the sheet (3a) and the second carrier film (2) as they are brought together, so that the sheet (3a) is inseparably welded to the tips of the bubbles (2a).

13. Use of an air cushion film (5) according to at least one of the preceding claims on freshly painted surfaces of automobiles or automobile parts as assembly and/or transit protection.

14. Use of an air cushion film (5) according to at least one of the preceding claims for protesting sensitive paint, metal, wood, plastic or glass surfaces.

## Revendications

1. Feuille autocollante (5) à coussins d'air pour la protection temporaire de surfaces fraîchement peintes de véhicules tels que des automobiles et de pièces de véhicule fraîchement peintes, qui présente un premier film de support (1) sur lequel un deuxième film de support (2) qui forme des bosses est prévu, les bosses (2a) étant en particulier remplies d'air,
**caractérisée en ce que**
une feuille (3a) de polyéthylène est appliquée de manière non libérale au moins en partie sur les bosses (2a) et **en ce qu'**une couche autoadhésive (3c) est appliquée sur la feuille (3a).

2. Feuille autocollante (5) à coussins d'air selon la revendication 1, **caractérisée en ce qu'**une couche (3b) de renforcement de l'adhérence est prévue entre la feuille (3a) et la couche adhésive (3c).

3. Feuille autocollante (5) à coussins d'air selon les revendications 1 ou 2,
**caractérisée en ce que**
le premier film de support (1), le deuxième film de support (2) et/ou la feuille (3a) contiennent au moins un agent de protection contre la lumière en quantité d'au moins 0,15 % en poids et/ou du dioxyde de titane, de préférence en quantité de 5 à 15 % en poids.

4. Feuille autocollante (5) à coussins d'air selon au moins l'une des revendications 1 à 3, **caractérisée en ce que**
le deuxième film de support (2) présente une structure en trois couches, à savoir une feuille de polyéthylène, une couche de barrière et une feuille de polyéthylène.

5. Feuille autocollante (5) à coussins d'air selon au moins l'une des revendications précédentes,
**caractérisée en ce que**
le premier film de support (1) est constitué de polyoléfines telles que le polyéthylène, le polypropylène, leurs mélanges ou leurs copolymères.

6. Feuille autocollante (5) à coussins d'air selon au moins l'une des revendications précédentes,
**caractérisée en ce que**
la pâte autoadhésive (3c) est constituée de caoutchouc butyle, la teneur en isoprène du caoutchouc butyle étant de jusque 1,8 pour cent en moles et de préférence de jusque 1,2 pour cent en moles.

7. Feuille autocollante (5) à coussins d'air selon au moins l'une des revendications précédentes,
**caractérisé en ce que**
la couche auto-adhésive (3c) est mélangée avec des élastomères, par exemple les polyisobutylènes, des copolymères de polyoléfines tels que l'EPM ou l'EPDM, des polybutènes, des copolymères séquencés hydrogénés de styrène et de diènes ou des copolymères d'acrylate, les élastomères étant utilisés de préférence à raison de 0 à 20 parties en poids et de façon particulièrement préférable à raison de moins de 10 parties en poids par rapport à 100 parties en poids de caoutchouc butyle.

8. Feuille autocollante (5) à coussins d'air selon au moins l'une des revendications précédentes,
**caractérisée en ce que**
la pâte autoadhésive (3c) est constituée d'un composant polaire A et d'un composant non polaire B, le composant polaire A étant présent à une teneur pondérale de 50 à 99 % et étant constitué d'un copolymère ou d'un mélange de copolymères d'éthylène et d'acétate de vinyle dont la teneur en acétate de vinyle est comprise entre 40 % en poids et 80 % en poids, le composant non polaire B étant présent à une teneur pondérale de 1 à 50 % et étant constitué d'un homopolymère ou copolymère ou d'un mélange d'homopolymère ou de copolymère peu cristallin ou amorphe, à chaîne principale saturée, d'α-oléfines comptant de 2 à 12 atomes de carbone.

9. Feuille autocollante (5) à coussins d'air selon au moins l'une des revendications précédentes,
**caractérisée en ce que**
la pâte autoadhésive (3c) est constituée d'un composant polaire A et d'un composant non polaire B, le composant polaire A étant présent à une teneur pondérale de 50 à 99 % et étant constitué d'un copolymère ou d'un mélange de copolymères d'éthylène et d'acétate de vinyle dont la teneur en acétate de vinyle est comprise entre 40 % en poids et 80 % en poids, le composant non polaire B est présent à une teneur pondérale de 1 à 50 % et est constitué de copolymères d'α-oléfines comptant de 2 à 12 atomes de carbone et de diènes non conjugués.

10. Feuille autocollante (5) à coussins d'air selon au moins l'une des revendications précédentes,
**caractérisée en ce que**
la pâte autoadhésive (3c) est constituée de poly(éthylène-acétate de vinyle) à une teneur en acétate de vinyle de 40 % en poids à 80 % en poids et en particulier de 70 % en poids, avec un angle de perte tan δ de 0,6 à 1,0 lorsqu'il est mesuré à une température de 60°C et une fréquence de 10⁻² Hz et de 0,4 à 0,7 lorsqu'il est mesuré à une température de 60°C et à une fréquence de 10 Hz.

11. Feuille autocollante (5) à coussins d'air selon au moins l'une des revendications précédentes,
**caractérisée en ce que**
la couche auto-adhésive (3c) est mélangée à un ou plusieurs additifs, par exemple des agents d'adhérence au toucher, des plastifiants, des charges minérales ou organiques, des pigments, des agents de protection contre la lumière qui présentent de préférence la forme d'amines stériquement gênées absorbant les UV (HALS), des agents de protection contre le vieillissement qui présentent de préférence la forme de lactones, d'antioxydants primaires ou secondaires, d'agents de réticulation et/ou de promoteurs de réticulation.

12. Procédé de fabrication d'une feuille auto-adhésive (5) à coussins d'air selon au moins l'une des revendications précédentes,
**caractérisé en ce que**
le deuxième film de support (2) provenant d'une extrudeuse par une tuyère est coulé sur un cylindre de transfert,
le cylindre de transfert applique le deuxième film de support (2) sur un cylindre d'emboutissage,
des creux en forme de bosse et une zone sous vide sont prévus dans le cylindre d'emboutissage,
lorsque le deuxième film de support (2) traverse la zone sous vide du cylindre d'emboutissage, il est attiré dans les creux du cylindre d'emboutissage pour ainsi former les bosses (2a),
immédiatement après avoir quitté la partie sous vide du cylindre d'emboutissage, le premier film de support (1) qui provient également d'une extrudeuse par une tuyère est appliqué sur un autre cylindre de transfert et depuis ce dernier sur le deuxième film de support (2) embouti,
la feuille de polyéthylène (3a) dentée de la couche auto-adhésive (3c) est appliquée sur les bosses (2a) du deuxième film de support (2) dans un poste de contre-collage constitué de cylindre, et ce en appliquant une pression qui aplatit le sommet des bosses (2a) remplies d'air sans cependant les écraser, avec ensuite application de chaleur en amenant par une tuyère à air chaud de l'air chauffé à environ 180°C dans l'interstice que la feuille (3a) et le deuxième film de support (2) forment lorsqu'ils sont assemblés, de telle sorte que la feuille (3a) se soude de manière non libérable aux sommets des bosses (2a).

13. Utilisation d'une feuille (5) à coussins d'air selon au moins l'une des revendications précédentes sur des surfaces fraîchement peintes d'automobiles ou de pièces d'automobiles pour les protéger lors du montagne et/ou du transport.

14. Utilisation d'une feuille (5) à coussins d'air selon au moins l'une des revendications précédentes pour protéger des surfaces sensibles de peinture, de métal, de bois, de matière synthétique ou de verre.
